# EUROPÄISCHE PATENTSCHRIFT

(11) **EP 1 488 112 B1**
(45) Veröffentlichungstag und Bekanntmachung des Hinweises auf die Patenterteilung: **21.12.2005**
(21) Anmeldenummer: 03720236.3
(22) Anmeldetag: 26.03.2003
(51) Int. Cl.: F16B 5/12, F16B 5/04

(54) **VERFAHREN ZUM HERSTELLEN EINER AUFKLIPPBEFESTIGUNGSANORDUNG SOWIE AUFKLIPPBEFESTIGUNGSANORDNUNG**
METHOD FOR PRODUCING A CLIP-ON FASTENING SYSTEM AND CORRESPONDING CLIP-ON FASTENING SYSTEM
PROCEDE DE FABRICATION D'UN ENSEMBLE DE FIXATION PAR CLIPSAGE ET ENSEMBLE DE FIXATION PAR CLIPSAGE

(30) Priorität: 28.03.2002 DE 10214337
(43) Veröffentlichungstag der Anmeldung: 22.12.2004
(73) Patentinhaber: Kreye, Bernhard, 31515 Wunstorf (DE); Lobitz, Ina, 31515 Wunstorf (DE)
(72) Erfinder: KREYE, Thomas, 31177 Harsum (DE)
(74) Vertreter: Thömen, Uwe
(86) Internationale Anmeldenummer: PCT/DE2003/001000
(87) Internationale Veröffentlichungsnummer: WO 2003/083315

(56) Entgegenhaltungen:
- EP-A- 0 748 683
- EP-A- 0 931 641
- EP-A- 0 958 909
- EP-A- 1 238 786
- WO-A-02/066545
- WO-A-02/076778
- DE-A- 3 601 255
- DE-A- 19 714 242
- DE-A- 19 809 537
- DE-C- 19 503 314
- GB-A- 1 210 421
- GB-A- 1 290 465
- US-A- 2 646 378
- US-A- 4 109 432
- US-A- 5 693 174

## Beschreibung

Die Erfindung betrifft ein Verfahren zum Herstellen einer Aufklippbefestigungsanordnung gemäß dem Oberbegriff des Patentanspruchs 1, sowie eine Aufklippbefestigungsanordnung selbst.

In vielen Bereichen der Technik werden Verbindungen zwischen Bauelementen benötigt. Neben festen Verbindungen sind dabei häufig auch lose Verbindungen erwünscht, um die Bauelemente bei Bedarf wieder voneinander trennen zu können, nachdem sie zuvor miteinander verbunden worden sind. Derartige lösbare Verbindungen werden beispielsweise gebraucht, um eine Kraftfahrzeugkarosserie mit einem Dichtungsprofil zu verbinden, welches im Bereich von Karosserieöffnungen für Fenster, Türen, Schiebedächer oder dergleichen angeordnet ist.

Durch die Verwendung einer lösbaren Verbindung ist es in solchen Fällen beispielsweise möglich, ein schadhaftes Dichtungsprofil, welches nach längerer Zeit einem Verschleiß unterliegt, gegen ein neues Dichtungsprofil auszutauschen.

Lösbare Verbindungen werden in der Praxis durch eine Aufklippbefestigungsanordnung realisiert. Dabei wird ein als Fußteil der Aufklippbefestigungsanordnung dienendes Befestigungselement kraftschlüssig mit einer Unterlage verbunden, welches zur lösbaren Aufklippbefestigung der Unterlage, z.B. eine Kraftfahrzeugkarosserie, mit einem Bauteil, z. B. einer Dichtung, dient. Das Bauteil ist mit einem Klippbereich versehen, wobei das Befestigungselement eine dem Klippbereich des Bauteils entsprechende und damit korrespondierende Querschnittsform aufweist. Zur Herstellung der lösbaren Verbindung wird das Bauteil mit dem Klippbereich nach Art einer Rastverbindung auf das Befestigungselement aufgeklippst.

Eine derartige Aufklippbefestigungsanordnung bzw. ein Verfahren zu deren Herstellung ist bereits in dem Dokument DE 198 09 537 C2 beschrieben, von welchem die Erfindung gemäß dem Oberbegriff des Patentanspruchs 1 ausgeht.

Bei dem bekannten Verfahren geht es vorrangig um die Herstellung des als Fußteil der Aufklippbefestigungsanordnung dienenden Befestigungselementes. Dabei wird ein Materialstrang aus einer noch nicht ausgehärteten Formmasse auf die Unterlage aufgetragen. Die Formmasse ist bezüglich ihrer Materialeigenschaft so gewählt, dass sie nach dem Auftragen nicht zerläuft und dass sie mit der Unterlage in eine haftende Verbindung gebracht und zum Befestigungselement ausgehärtet wird.

Der erwähnte Materialstrang wird beim Auftragen durch ein Führungselement geführt, welches im Querschnitt die Querschnittsform des herzustellenden Befestigungselementes aufweist, wobei ein Formungselement verwendet wird, dass eine pilzförmige Querschnittsform besitzt.

Die erwähnte Formmasse des Materialstranges verläuft also nach dem Auftragen auf die Unterlage nicht, und die Formmasse geht mit der Unterlage in eine haftende Verbindung. Während des Ausbildens dieser haftenden Verbindung härtet der Materialstrang zu dem Befestigungselement aus, wodurch dann das Fußteil der Aufklippbefestigungsanordnung fertig hergestellt ist. An dem ausgehärteten Befestigungselement kann dann das weitere gewünschte Bauelement, z. B. das Dichtungsprofil, aufgeklippst und lösbar befestigt werden.

Grundsätzlich haben sich das bekannte Verfahren zur Herstellung des bekannten Befestigungselementes und die entsprechende Aufklippbefestigungsanordnung zwar als brauchbar erwiesen, allerdings hat sich in der täglichen Praxis gezeigt, dass doch immer noch gewisse Nachteile auftreten. Wenn bei der Herstellung des bekannten Befestigungselementes die Formmasse des Materialstranges so zu wählen ist, dass sie nach dem Auftragen auf die Unterlage nicht zerläuft, besteht eine Einschränkung hinsichtlich des Materials der Formmasse. So sind thermoplastische Werkstoffe wegen der fehlenden Standfestigkeit nicht geeignet. Vielmehr ist man auf solche Materialien eingeschränkt, die im Hinblick auf Standart-Materialien vergleichsweise teuer sind.

Beim Stand der Technik sind die für die Herstellung des Befestigungselementes verwendeten Werkstoffe notwendigerweise elastisch. Die Shore-Härte beträgt üblicherweise zwischen 30 bis 80 Shore A. Dadurch ist aber die Größe des Befestigungselementes dahingehend eingeschränkt, dass kleine Abmessungen des Befestigungselementes nicht möglich sind, denn dafür sind härtere Werkstoffe erforderlich. Andererseits besteht aber allgemein und insbesondere auch bei Kraftfahrzeugen die Forderung nach platz- und gewichtsparenden Aufklippbefestigungsanordnungen.

Obwohl bei der Herstellung des bekannten Befestigungselementes der Werkstoff des Materialstranges, also die Formmasse, so gewählt ist, dass sie nach dem Auftragen nicht zerlaufen soll, hat sich in der Praxis gezeigt, dass der Materialstrang beim Auftragen auf die Unterlagen vergleichsweise große Toleranzen hinsichtlich der gewünschten Querschnittsform aufweist. Wenn aber die Querschnittsform über die Länge des Materialstranges gesehen Abweichungen besitzt, kann dadurch die Funktion der Verklippsung mit dem anderen Bauelement, z. B. der Dichtung, beeinträchtigt werden. Dies liegt daran, dass es bei der Herstellung des bekannten Befestigungselementes nicht möglich ist, nach dem Austreten des Materialstranges aus dem Führungselement eine durchgehende Kalibrierung in einem Kalibriervorgang vorzunehmen, wodurch die Einhaltung eines exakten Querschnittsprofils des Materialstranges, also des Befestigungselementes, gewährleistet wäre. Weil diese Möglichkeit beim Stand der Technik nicht besteht, treten vergleichsweise große Toleranzen im Hinblick auf das Querschnittsprofil des Befestigungselementes auf. Im Extremfall kann dies sogar dazu führen, dass es bei der Herstellung des Befestigungselementes nicht verwendbare Fehlteile gibt.

In dem weiteren Dokument DE 197 14 242 A1 ist ein Verfahren und eine Vorrichtung bzw. eine Aufklippbefestigungsanordnung zum Herstellen einer Verbindung zwischen zwei Bauteilen beschrieben. Bei diesem bekannten Verfahren wird ein erstes Bauteil lösbar mit einem zweiten Bauteil verbunden, wobei die Verbindung der beiden Bauteile mit Hilfe eines Verbindungsteils erfolgt. Im Bereich des Verbindungsteils wird auf das erste Bauteil ein Kleber aufgetragen und danach wird das Verbindungsteil auf das erste Bauteil aufgesetzt.

Von Bedeutung ist die Ausgestaltung des Verbindungsteils, welches einen etwa T-förmigen Querschnitt besitzt und beidseitig vorstehende Haltevorsprünge aufweist. Ferner besitzt das Verbindungsteil im Bereich seiner Längsmittellinie einen oberen Kanal und einen parallel dazu verlaufenden unteren Kanal, wobei beide Kanäle über in Abständen voneinander angeordnete Öffnungen in Verbindung stehen.

Zur Herstellung einer Verbindung zwischen den beiden Bauteilen wird in den oberen Kanal eine Vergussmasse eingegeben, welche dann durch die Öffnungen in den unteren Kanal des Verbindungsteils gelangt und sich dort mit dem Kleber und somit mit dem ersten Bauteil verbindet. Im Ergebnis sind dann der untere Kanal, die Öffnungen und der obere Kanal mit der Vergussmasse ausgefüllt. Nachdem die Vergussmasse einen festen Zustand erreicht hat, ist zwischen der mit dem ersten Bauteil verbundenen Vergussmasse und dem Verbindungsteil ein Formschluss entstanden, der das Verbindungsteil am ersten Bauteil festhält. Eine kraftschlüssige Verbindung ist dabei nicht vorgesehen. Anschließend wird das zweite Bauteil auf das Verbindungsteil aufgeklippt, womit die angestrebte lösbare Verbindung bei dem bekannten Verfahren hergestellt ist.

Dieses bekannte Verfahren ist wegen des in jedem Fall benötigten Verbindungsteils und dessen besondere Ausgestaltung sowie wegen der benötigten Vergussmasse als aufwendig und nachteilig anzusehen.

Der Erfindung liegt die Aufgabe zugrunde, ein Verfahren zum Herstellen einer Aufklippbefestigungsanordnung gemäß dem Oberbegriff des Patentanspruchs 1 sowie eine Aufklippbefestigungsanordnung gemäß dem Oberbegriff des Patentanspruchs 17 zu schaffen, bei welchen die voranstehend beschriebenen Nachteile vermieden sind, und welche eine noch sicherere und zuverlässigere lösbare Befestigung von Bauelementen miteinander ermöglicht.

Die Lösung dieser Aufgabe erfolgt bei dem im Oberbegriff des Patentanspruchs 1 vorausgesetzten Verfahren durch die kennzeichnenden Merkmale des Patentanspruchs 1 und hinsichtlich der Aufklippbefestigungsanordnung wird die Aufgabe durch die Merkmale des Patentanspruchs 17 gelöst.

Ein ähnliches Verfahren ist zwar in dem weiteren Dokument WO 02/076778 A beschrieben, jedoch ist dieses prioritätsältere Dokument erst nach dem Prioritätsdatum der vorliegenden Erfindung zur Veröffentlichung gelangt. Außerdem enthält das Dokument keine Angaben über die bei der Erfindung vorgesehene Härte des Materials für das Befestigungselement.

Bei der Erfindung wird das Befestigungselement in einem Extrusionsverfahren als ein bereits ausgehärtetes Endlosprofil vorgefertigt und hergestellt. Dabei wird ein hartes Material verwendet. Das derart vorgefertigte und ausgehärtete Befestigungselement wird bei Bedarf, wenn also die Aufklippbefestigungsanordnung hergestellt werden soll, mit einer Andruckrolle gegen die Unterlage gedrückt und aufgeklebt. Anschließend wird das Bauteil mit dem Klippbereich auf das Befestigungselement aufgeklippst. Bei dem erfindungsgemäßen Verfahren wird ein Material mit einer Härte von mindesten 40 Shore D verwendet.

Der grundlegende Gedanke der Erfindung besteht darin, das als Fußteil der Aufklippbefestigungsanordnung dienende Befestigungselement als ein Endlosprofil separat vorzufertigen und herzustellen, Anders als beim Stand der Technik ist es wegen dieser separaten Vorfertigung möglich, bei den Werkstoffen für das Befestigungselement auf Standarttypen zurückzugreifen, die preiswert sind.

Da bei der Erfindung das Befestigungselement in einem separaten Arbeitsgang als ein Vorprodukt hergestellt wird, kann beim entsprechenden Extrusionsverfahren eine höhere Geschwindigkeit im Vergleich zum bekannten Verfahren gewählt werden, bei welchem ein Materialstrang aus einer noch nicht ausgehärteten Formmasse gleich nach dem Austritt aus dem Führungselement auf die Unterlage aufgebracht wird, um eine haftende Verbindung mit der Unterlagen herzustellen. Vielmehr kann bei der Erfindung eine als Basis dienende Unterlage beim freien Extrudieren als ein laufendes Band ausgebildet werden, und anschließend besteht die Möglichkeit, das so hergestellte Endlosprofil auf eine Rolle aufzurollen und bis zur späteren Verwendung zwischenzulagern.

Ein weiterer Vorteil der Erfindung besteht darin, dass man in der Auswahl des Werkstoffes nicht mehr eingeschränkt ist. Es können somit harte Werkstoffe für das Befestigungselement mit der gewünschten Querschnittsform verwendet werden, wodurch sich platz- und gewichtsparende Lösungen ergeben. Durch die freie Auswahl des Werkstoffes besteht außerdem die Auswahl von verschiedenen Klebemöglichkeiten, wenn das Befestigungselement in eine kraftschlüssige Verbindung mit der Unterlage gebracht wird, um die lösbare Befestigung der betreffenden Bauelemente miteinander herzustellen.

Wenn bei der Erfindung das als Fußteil der Aufklippbefestigungsanordnung dienende Befestigungselement als ein Vorprodukt separat vorgefertigt wird, besteht weiterhin der Vorteil, die gewünschte Querschnittsform des Befestigungselementes durch einen Kalibriervorgang zu überprüfen und somit nur geringe oder auch gar keine Toleranzen über die Länge des Endlosprofils zu erzielen. Dies ist insbesondere dann von Bedeutung, wenn in gewünschter Weise aus Platz- und Gewichtsgründen kleine Abmessungen des Befestigungselements und des damit korrespondierenden Klippbereichs des anderen Bauteils angestrebt werden. Bei einer durch einen nachgeschalteten Kalibriervorgang erfindungsgemäß ermöglichten Herstellung des Befestigungselementes lässt sich dieses nämlich sehr genau fertigen und somit auch wesentlich kleiner ausführen.

In zweckmäßiger Ausgestaltung der Erfindung wird das ausgehärtete Endlosprofil in Linie mit dem Verfahrensschritt des Aufklebens des Befestigungselementes auf die Unterlage hergestellt. Daneben kann es aber auch vorteilhaft sein, das vorgefertigte Endlosprofil zunächst auf einer Rolle zwischenzulagern und das Endlosprofil dann zum Zwecke des Aufklebens auf die Unterlage von der Rolle abzuwickeln.

Eine andere vorteilhafte Ausgestaltung der Erfindung besteht darin, dass auf die Unterseite des Endlosprofils ein doppelseitiges Klebeband aufgebracht wird. Damit lässt sich auf einfache Weise eine gute haftende Verbindung des Befestigungselementes mit der Unterlage erzielen.

Gemäß einer anderen zweckmäßigen Ausgestaltung der Erfindung wird zur Herstellung der angesprochenen haftenden Verbindung auf die Unterseite des Endlosprofils ein Kleber aufgebracht. Ebenso ist es auch möglich, sowohl auf die Unterseite des Endlosprofils als auch auf die Unterlage selbst einen Kleber aufzubringen.

Eine andere vorteilhafte Ausgestaltung der Erfindung sieht vor, dass das Endlosprofil an der zu verklebenden Fläche kurz vor dem zusammenführen mit der Unterlage erwärmt wird. Dies ist dann zweckmäßig, wenn das Befestigungselement bzw. das Endlosprofil aus einem Material besteht, welches bei Erwärmung eine Verklebung zur Unterlage eingeht. Es kann aber auch ein Schmelzkleber in Linie auf das Endlosprofil direkt vor dem Zusammenfügen mit der Unterlage aufgetragen werden, wobei der.Schmelzkleber dann bei der Erwärmung eine Verbindung eingeht und das Endlosprofil haftend mit der Unterlage verbindet.

In vorteilhafter Weise wird als Material für das Befestigungselement ein Thermoplast oder ein thermoplastisches Elastomer verwendet. Auch Polyurethan hat sich als zweckmäßiges Material erwiesen.

Eine andere Ausgestaltung der Erfindung sieht vor, dass als Material für den Klippsbereich, ebenso wie beim Endlosprofil, gleichfalls ein hartes Material verwendet wird. Der Vorteil dieser Maßnahme besteht darin, dass eine sehr sichere Aufklippbefestigungsanordnung geschaffen werden kann. Zum einen sind die Querschnittsprofile beim Befestigungselement und beim Klippbereich praktisch ohne Toleranzen und damit extrem genau herstellbar, und zum anderen lassen sich wegen des harten Materials vergleichsweise kleine Abmessungen erzielen. Wenn bei diesen Voraussetzungen ein Bauelement mit seinem Klippbereich auf das Befestigungselement aufgeklippst wird, ergibt sich eine sehr stabile lösbare Verbindung.

Als zweckmäßig hat sich für das Befestigungselement und/oder für den Klippbereich des Bauelements ein Material mit einer Härte von vorzugsweise 45 Shore D erwiesen.

Als besonders vorteilhaft ist die weitere Ausgestaltung der Erfindung anzusehen, wonach auch das Bauteil, z. B. die Dichtung, selbst ebenfalls als Endlosprofil vorgefertigt wird.

Das Aufbringen des Befestigungselements auf die Unterlage und das Verkleben mit der Unterlage und/oder das Aufklippsen des Bauteils auf das Befestigungselement kann vorteilhafterweise vollständig automatisch mit einem Roboter vorgenommen werden, wodurch die Herstellung der lösbaren Verbindung weiter vereinfacht wird.

Als zweckmäßig hat sich für das Befestigungselement eine pilzförmige Querschnittsform gezeigt, wobei dann der Klippbereich eine damit korrespondierende Querschnittsform aufweist. Umgekehrt kann aber auch der Klippbereich mit einer pilzförmigen Querschnittsform hergestellt werden, und die Querschnittsform des Befestigungselementes ist dann umgekehrt entsprechend korrespondierend ausgebildet. Daneben sind auch andere Querschnittsformen denkbar. Entscheidend ist allein, dass die beiden beteiligten Elemente, nämlich das Befestigungselement und das Bauteil bzw. der Klippbereich korrespondierend im Querschnitt geformt sind, um ein Aufklippsen bzw. um eine lösbare Verbindung zu ermöglichen.

Da man bei der Erfindung hinsichtlich der Materialauswahl und des Werkstoffes für das Befestigungselement freier ist als beim Stand der Technik, lässt sich in der Praxis für jede Oberfläche der Unterlage leicht ein passendes Klebesystem finden. Dies führt zu einer wesentlich höheren Flexibilität der erfindungsgemäßen Aufklippbefestigungsanordnungen.

Im übrigen kann bei Anwendung der Erfindung das Endlosprofil auch von einem Vorlieferanten hergestellt und gefertigt werden. Für das Aufbringen des Befestigungselementes benötigt der Produzent selbst keinen Extruder. Dies führt zu geringeren Investitionen und auch zu einem geringeren Platzbedarf.

Weitere Vorteile und zweckmäßige Ausgestaltungen der Erfindung ergeben sich aus den Unteransprüchen und der nachfolgenden Beschreibung.

Nachfolgend wird die Erfindung beispielhaft anhand der Zeichnung näher erläutert. Es zeigen:
- Fig. 1: eine Querschnittsansicht eines mit einer Unterlage verbundenen Befestigungselements,
- Fig. 2: eine Querschnittsansicht einer fertigen Aufklippbefestigungsanordnung,
- Fig. 3: eine schematische Querschnittsansicht zur Verdeutlichung des Verklebens eines vorgefertigten Befestigungselementes mit einer Unterlage und
- Fig. 4: eine andere Ausführung der Erfindung.

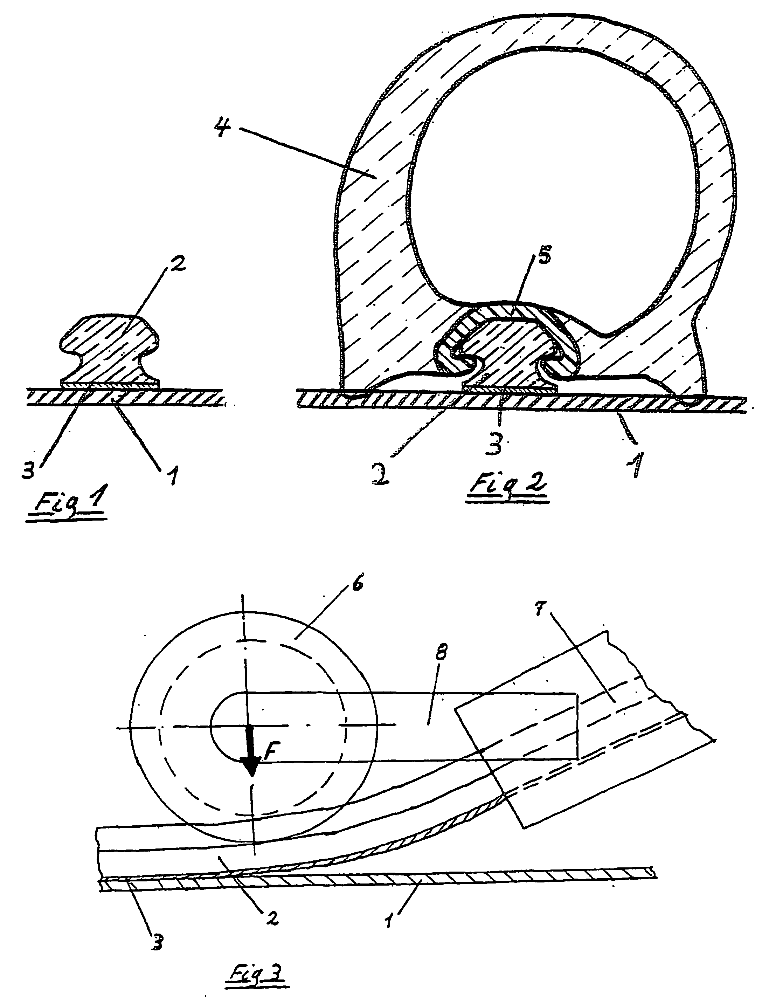

In Fig. 1 ist ein Befestigungselement 2 dargestellt, welches einen pilzförmigen Querschnitt besitzt. Das Befestigungselement 2 ist als Endlosprofil vorgefertigt worden. Mit einem doppelseitigen Klebeband 3 ist das Befestigungselement 2 kraftschlüssig mit einer Unterlage 1, z. B. einem Karosserieteil eines Kraftfahrzeuges, verbunden.

Fig. 2 zeigt eine Dichtung 4, welche eine Bauteil bildet, das lösbar mit dem Befestigungselement 2 verbunden ist. Die Dichtung 4 umfasst einen Klippbereich 5, welcher aus einem anderen Material als die Dichtung 4 selbst bestehen kann. Die Querschnittsform des Klippbereiches 5 korrespondiert mit der Querschnittsform des Befestigungselementes 2, und Fig. 2 zeigt den Zustand, in welchem die Dichtung 4 nach Art einer Rastverbindung auf das Befestigungselement 2 aufgeklippst ist, wodurch die gewünschte lösbare Verbindung hergestellt wird.

Vorzugsweise bestehen der Klippbereich 5 und das Befestigungselement 2 aus einem harten Material mit einer Härte von etwa 45 Shore D. Ebenso wie das Befestigungselement 2 lässt sich übrigens auch die Dichtung 4 mit dem Klippbereich 5 als Vorprodukt herstellen, und dadurch ist es möglich, hinsichtlich der Querschnittsformen des Befestigungselementes 2 und auch des Klippbereiches 5 extrem geringe Toleranzen einzuhalten. Die vorfertigung kann nämlich sehr genau erfolgen. Aufgrund der geringen Toleranzen ist es möglich, das Befestigungselement 2 mit kleinen Abmessungen herzustellen. In Verbindung mit dem harten Material und der erzielten Passgenauigkeit beim Zusammenklippsen ergibt sich dadurch eine sehr sichere lösbare Verbindung.

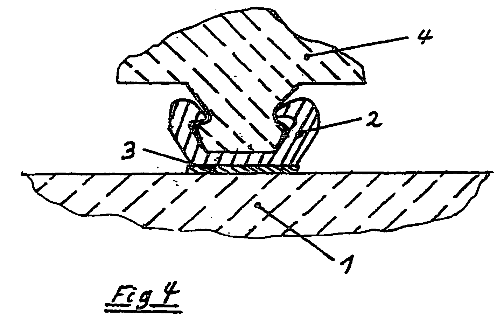

Fig. 3 verdeutlicht, wie das als Endlosprofil vorgefertigte Befestigungselement 2 auf die Unterlage 1 gebracht wird: Zu diesem Zweck wird das Befestigungselement 2 von einer nicht dargestellten Rolle abgerollt und über eine Zuführung 7 in Richtung auf die Unterlage 1 zugeführt.

Auf die untere Seite des Befestigungselementes 2 ist ein doppelseitiges Klebeband 3 angebracht worden, und mittels der Andruckrolle 6, die über eine Verbindung 8 mit der Zuführung 7 in Verbindung steht, wird das Befestigungselement 2 mit dem doppelseitigen Klebeband 3 in Richtung der Kraft F auf die Unterlage 1 gedrückt und in eine haftende Verbindung damit gebracht.

Fig. 4 zeigt eine andere Ausführungsform einer Aufklippbefestigungsanordnung. Als Bauteil 4 ist hier keine Dichtung, sondern ein Formteilrahmen verwendet. Die Anordnung gemäß Fig. 4 wird häufig bei der Rahmung von Fahrzeugscheiben eingesetzt.

Bei der Herstellung des Formteilrahmens, welches das Bauteil 4 bildet, ist es nicht möglich, den Klippbereich aus einem anderen harten Material zu wählen, denn üblicherweise bestehen Formteilrahmen aus Gummi, weich-PVC, Polyurethan oder TPE mit einer Härte Shore A von 30 bis 90. Anders als in den Figuren 1 - 3 gibt es demnach bei der Ausführungsform gemäß Fig. 4 keinen gesonderten Klippbereich.

Im Bereich der lösbaren Verbindung ist das Bauteil 4 im Querschnitt pilzförmig ausgebildet, und das Befestigungselement besitzt hier im Gegensatz zu Fig. 1 die entsprechende korrespondierende Form zu dem pilzförmigen Querschnitt. In Übereinstimmung mit der Erfindung ist das Befestigungselement 2 als Endlosprofil aus einem harten Material vorgefertigt.

### Bezugszeichenliste

- 1: Unterlage
- 2: Befestigungselement
- 3: doppelseitiges Klebeband
- 4: Bauteil
- 5: Klippbereich
- 6: Andruckrolle
- 7: Zuführung
- 8: Verbindung

## Patentansprüche

1. Verfahren zum Herstellen einer Aufklippbefestigungsanordnung, bei welcher ein als Fußteil der Aufklippbefestigungsanordnung dienendes Befestigungselement (2) kraftschlüssig mit einer Unterlage (1) verbunden wird, welches zur lösbaren Aufklippbefestigung der Unterlage (1) mit einem Bauteil (4), insbesondere einer Dichtung, dient, welches mit einem Klippbereich (5) versehen ist, wobei das Befestigungselement eine dem Klippbereich (5) des Bauteils (4) entsprechende Querschnittsform aufweist, **dadurch gekennzeichnet, dass** auf die Unterlage (1) ein solches Befestigungselement (2) geklebt wird, welches in einem Extrusionsverfahren zuvor bereits als ausgehärtetes Endlosprofil vorgefertigt und hergestellt worden ist, wobei ein hartes Material verwendet wird, und wobei das Endlosprofil beim Aufkleben mit einer Andruckrolle gegen die Unterlage (1) gedrückt wird, und dass das Bauteil (4) mit dem Klippbereich (5) auf das fertige Befestigungselement (2) aufgeklippst wird, und dass ein Material mit einer Härte von mindestens 40 shore D verwendet wird.

2. Verfahren nach Anspruch 1, **dadurch gekennzeichnet, dass** das ausgehärtete Endlosprofil in Linie mit dem Verfahrensschritt des Aufklebens des Befestigungselements (2) auf die Unterlage hergestellt wird.

3. Verfahren nach Anspruch 1, **dadurch gekennzeichnet, dass** das Endlosprofil vor dem Aufkleben auf eine Rolle aufgewickelt wird und zum Zweck des Aufklebens von der Rolle abgewickelt wird.

4. Verfahren nach einem der vorhergehenden Ansprüche 1 - 3, **dadurch gekennzeichnet, dass** auf die Unterseite des. Endlosprofils ein doppelseitiges Klebeband (3) aufgebracht wird.

5. Verfahren nach einem der vorhergehenden Ansprüche 1 - 3, **dadurch gekennzeichnet, dass** auf die Unterseite des Endlosprofils ein Kleber aufgebracht wird.

6. Verfahren nach einem der vorhergehenden Ansprüche 1 - 3, **dadurch gekennzeichnet, dass** auf die Unterseite des Endlosprofils und auf die Unterlage ein Kleber aufgebracht wird.

7. Verfahren nach einem der vorhergehenden Ansprüche 1 - 3, **dadurch gekennzeichnet, dass** das Endlosprofil an der zu verklebenden Fläche kurz vor dem Zusammenführen mit der Unterlage erwärmt wird.

8. Verfahren nach einem der vorhergehenden Ansprüche 1 - 7, **dadurch gekennzeichnet, dass** als Material für das Befestigungselement (2) ein Thermoplast verwendet wird.

9. Verfahren nach einem der vorhergehenden Ansprüche 1 - 7, **dadurch gekennzeichnet, dass** als Material für das Befestigungselement (2) thermoplastisches Elastomer verwendet wird.

10. Verfahren nach einem der vorhergehenden Ansprüche 1 - 7, **dadurch gekennzeichnet, dass** als Material für das Befestigungselement (2) Polyurethan verwendet wird.

11. Verfahren nach einem der vorhergehenden Ansprüche, 1 - 10, **dadurch gekennzeichnet, dass** als Material für den Klippsbereich (5) ein ebenfalls hartes Material verwendet wird.

12. Verfahren nach Anspruch 1 und/oder 11, **dadurch gekennzeichnet, dass** ein Material mit einer Härte von 45 Shore D verwendet wird.

13. Verfahren nach Anspruch 1, **dadurch gekennzeichnet, dass** das Bauteil (4) ebenfalls als Endlosprofil vorgefertigt wird.

14. Verfahren nach einem der vorhergehenden Anspruche 1 - 13, **dadurch gekennzeichnet, dass** das Aufbringen des Befestigungselements (2) auf die Unterlage (1) und das Verkleben mit der Unterlage (1) und/oder das Aufklippsen des Bauteils (4) auf das Befestigungselement (2) automatisch mit einem Roboter vorgenommen wird.

15. Verfahren nach einem der vorhergehenden Ansprüche 1 - 14, **dadurch gekennzeichnet, dass** das Befestigungselement (2) mit einer pilzförmigen Querschnittsform hergestellt wird.

16. Verfahren nach einem der vorhergehenden Ansprüche 1 - 14, **dadurch gekennzeichnet, dass** der Klippbereich (5) des Bauteils (4) mit einer pilzförmigen Querschnittsform hergestellt wird.

17. Aufklippbefestigungsanordnung, bei welcher ein als Fußteil der Aufklippbefestigungsanordnung dienendes Befestigungselement (2) kraftschlüssig mit einer Unterlage (1) verbunden ist, welches zur lösbaren Aufklippbefestigung der Unterlage (1) mit einem Bauteil (4), insbesondere einer Dichtung, dient, welches mit einem Klippbereich (5) versehen ist, wobei das Befestigungselement eine dem Klippbereich (5) des Bauteils (4) entsprechende Querschnittsform aufweist, **da****durch gekenneichnet****,** dass auf die Unterlage (1) ein solches Befestigungselement (2) geklebt ist, welches in einem Extrusionsverfahren zuvor bereits als ausgehärtetes Endlosprofil vorgefertigt und hergestellt worden ist, wobei ein hartes Material verwendet wird, und wobei das Endlosprofil beim Aufkleben gegen die Unterlage (1) gedrückt ist, und dass das Bauteil (4) mit dem Klippbereich (5) auf das fertige Befestigungselement (2) aufgeklippst ist, und dann das harte Material eine Härte von mindestens 40 shore D aufweist.

## Claims

1. Method for producing a clip-on fastening system, in which a fastening element (2) which serves as the base part of the clip-on fastening system is connected in a force-fitting manner to a support (1), which fastening element (2) serves to releasably fasten the support (1) in a clip-on manner to a component (4), in particular a seal, which is provided with a clip area (5), wherein the fastening element has a cross-sectional shape which corresponds to the clip area (5) of the component (4), **characterized in that** such a fastening element (2) is stuck onto the support (1), said fastening element (2) being pre-fabricated and produced beforehand as a hardened continuous profile in an extrusion process, wherein a hard material is used, and wherein the continuous profile is pressed against the support (1) by a pressure roller during the sticking operation, and **in that** the component (4) is clipped onto the finished fastening element (2) by way of the clip area (5), and **in that** a material having a hardness of at least 40 Shore D is used.

2. Method according to Claim 1, **characterized in that** the hardened continuous profile is produced in line with the method step of sticking the fastening element (2) onto the support.

3. Method according to Claim 1, **characterized in that** the continuous profile is wound onto a roll prior to the sticking operation and is unwound from the roll for sticking purposes.

4. Method according to any of Claims 1 to 3, **characterized in that** a double-sided adhesive tape (3) is applied to the underside of the continuous profile.

5. Method according to any of Claims 1 to 3, **characterized in that** an adhesive is applied to the underside of the continuous profile.

6. Method according to any of Claims 1 to 3, **characterized in that** an adhesive is applied to the underside of the continuous profile and to the support.

7. Method according to any of Claims 1 to 3, **characterized in that** the continuous profile is heated on the face to be stuck shortly before it is brought together with the support.

8. Method according to any of Claims 1 to 7, **characterized in that** a thermoplastic is used as the material for the fastening element (2).

9. Method according to any of Claims 1 to 7, **characterized in that** a thermoplastic elastomer is used as the material for the fastening element (2).

10. Method according to any of Claims 1 to 7, **characterized in that** polyurethane is used as the material for the fastening element (2).

11. Method according to any of Claims 1 to 10, **characterized in that** a hard material is likewise used as the material for the clip area (5).

12. Method according to Claim 1 and/or 11, **characterized in that** a material having a hardness of 45 Shore D is used.

13. Method according to Claim 1, **characterized in that** the component (4) is likewise pre-fabricated as a continuous profile.

14. Method according to any of Claims 1 to 13, **characterized in that** the operations of applying the fastening element (2) to the support (1) and sticking it to the support (1) and/or the operation of clipping the component (4) onto the fastening element (2) are carried out automatically by a robot.

15. Method according to any of Claims 1 to 14, **characterized in that** the fastening element (2) is produced with a mushroom-shaped cross section.

16. Method according to any of Claims 1 to 14, **characterized in that** the clip area (5) of the component (4) is produced with a mushroom-shaped cross section.

17. Clip-on fastening system, in which a fastening element (2) which serves as the base part of the clip-on fastening system is connected in a force-fitting manner to a support (1), which fastening element (2) serves to releasably fasten the support (1) in a clip-on manner to a component (4), in particular a seal, which is provided with a clip area (5), wherein the fastening element has a cross-sectional shape which corresponds to the clip area (5) of the component (4), **characterized in that** such a fastening element (2) is stuck onto the support (1), said fastening element (2) being pre-fabricated and produced beforehand as a hardened continuous profile in an extrusion process, wherein a hard material is used, and wherein the continuous profile is pressed against the support (1) during the sticking operation, and **in that** the component (4) is clipped onto the finished fastening element (2) by way of the clip area (5), and **in that** the hard material has a hardness of at least 40 Shore D.

## Revendications

1. Procédé de fabrication d'un dispositif de fixation par clipsage, dont un élément de fixation (2) servant de pied au dispositif de fixation par clipsage est relié par adhérence à un support (1) et sert à la fixation amovible par clipsage du support (1) sur un composant (4), en particulier, une garniture d'étanchéité, composant qui est pourvu d'une zone de clipsage (5), l'élément de fixation présentant une forme de section transversale qui correspond à la zone de clipsage (5) du composant (4), **caractérisé en ce qu'**un élément de fixation (2) de ce genre, qui a été préfabriqué et produit comme profilé sans fin durci au moyen d'un procédé d'extrusion, est collé sur le support (1), une matière dure étant utilisée et le profilé sans fin étant, lors du collage, pressé contre le support (1) au moyen d'un rouleau presseur, et **en ce que** le composant (4) est clipsé sur l'élément de fixation (2) fini au niveau de la zone de clipsage (5) et **en ce qu'**est utilisée une matière d'une dureté de 40 Shore D au moins.

2. Procédé selon la revendication 1, **caractérisé en ce que** le profilé sans fin durci est fabriqué en ligne avec l'étape de procédé, au cours de laquelle l'élément de fixation est collé (2) sur le support.

3. Procédé selon la revendication 1, **caractérisé en ce qu'**avant le collage, le profilé sans fin est enroulé autour d'un rouleau et déroulé de celui-ci pour les besoins du collage.

4. Procédé selon l'une des revendications précédentes 1 à 3, **caractérisé en ce qu'**un ruban adhésif double face (3) est appliqué sur la face inférieure du profilé sans fin.

5. Procédé selon l'une des revendications précédentes 1 à 3, **caractérisé en ce qu'**une colle est appliquée sur la face inférieure du profilé sans fin.

6. Procédé selon l'une des revendications précédentes 1 à 3, **caractérisé en ce qu'**une colle est appliquée sur la face inférieure du profilé sans fin et sur le support.

7. Procédé selon l'une des revendications précédentes 1 à 3, **caractérisé en ce que** le profilé sans fin est chauffé au niveau de la surface à coller peu de temps avant l'assemblage avec le support.

8. Procédé selon l'une des revendications précédentes 1 à 7, **caractérisé en ce qu****'**une matière thermoplastique est utilisée comme matière pour l'élément de fixation (2).

9. Procédé selon l'une des revendications précédentes 1 à 7, **caractérisé en ce qu****'**un élastomère thermoplastique est utilisé comme matière pour l'élément de fixation (2).

10. Procédé selon l'une des revendications précédentes 1 à 7, **caractérisé en ce que** du polyuréthanne est utilisé comme matière pour l'élément de fixation (2).

11. Procédé selon l'une des revendications précédentes 1 à 10, **caractérisé en ce qu****'**une matière dure est également utilisée comme matière pour la zone de clipsage (5).

12. Procédé selon les revendications 1 et/ou 11, **caractérisé en ce qu****'**est utilisée une matière présentant une dureté de 45 Shore D.

13. Procédé selon la revendication 1, **caractérisé en ce que** le composant (4) est également préfabriqué comme profilé sans fin.

14. Procédé selon l'une des revendications précédentes 1 à 13, **caractérisé en ce que** le positionnement de l'élément de fixation (2) sur le support (1) et le collage avec celui-ci et/ou le clipsage du composant (4) sur l'élément de fixation (2) sont effectués automatiquement à l'aide d'un robot.

15. Procédé selon l'une des revendications précédentes 1 à 14, **caractérisé en ce que** l'élément de fixation (2) est conçu à section transversale en forme de champignon.

16. Procédé selon l'une des revendications précédentes 1 à 14, **caractérisé en ce que** la zone de clipsage (5) du composant (4) est fabriquée avec une section transversale en forme de champignon.

17. Dispositif de fixation par clipsage, dont un élément de fixation (2) servant de pied au dispositif de fixation par clipsage est relié par adhérence à un support (1) et sert à la fixation amovible par clipsage du support (1) sur un composant (4), en particulier une garniture d'étanchéité, composant qui est pourvu d'une zone de clipsage (5), l'élément de fixation présentant une forme de section transversale qui correspond à la zone de clipsage (5) du composant (4), **caractérisé en ce qu****'**un élément de fixation (2) de ce genre, qui a été préfabriqué et produit sous forme de profilé sans fin durci en utilisant une matière dure, est collé sur le support (1), le profilé sans fin étant pressé contre le support (1) lors du collage et le composant (4) étant clipsé sur l'élément de fixation (2) fini au niveau de la zone de clipsage (5), et en ce que la matière dure présente une dureté de 40 Shore D au moins.
